# EUROPEAN PATENT SPECIFICATION

(11) **EP 4 246 964 B1**
(45) Date of publication and mention of the grant of the patent: **31.12.2025**
(21) Application number: 22161759.0
(22) Date of filing: 14.03.2022
(51) Int. Cl.: H04N 7/18, G08B 13/196

(54) **A VIDEO SYSTEM FOR CAPTURING, PROCESSING AND RECORDING A VIDEO SEQUENCE AND A METHOD FOR OPERATING SAID VIDEO SYSTEM**
VIDEOSYSTEM ZUR ERFASSUNG, VERARBEITUNG UND AUFZEICHNUNG EINER VIDEOSEQUENZ UND VERFAHREN ZUM BETREIBEN DIESES VIDEOSYSTEMS
SYSTÈME VIDÉO DE CAPTURE, DE TRAITEMENT ET D'ENREGISTREMENT D'UNE SÉQUENCE VIDÉO ET PROCÉDÉ DE FONCTIONNEMENT DUDIT SYSTÈME VIDÉO

(43) Date of publication of application: 20.09.2023
(73) Proprietor: Axis AB, 223 69 Lund (SE)
(72) Inventor: Keskikangas, Axel, 223 69 Lund (SE)
(74) Representative: AWA Sweden AB

(56) References cited:
- EP-B1- 3 104 598
- YUFENG WANG ET AL: "Security and privacy for body cameras used in law enforcement", 2015 IEEE CONFERENCE ON COMMUNICATIONS AND NETWORK SECURITY (CNS), IEEE, 28 September 2015 (2015-09-28), pages 173 - 181, XP032825397, DOI: 10.1109/CNS.2015.7346826

## Description

### TECHNICAL FIELD

The present invention relates to the field of encryption of a video stream with the aim of enhancing forensic capabilities, and more particular to a device handling activation and deactivation of an encrypted post buffer and a method for operating the device.

### TECHNICAL BACKGROUND

Content security for surveillance data is getting increasingly important, as devices capturing surveillance data in public spaces are more frequently used. Privacy and integrity of people, for instance being filmed in public places, is one of the reasons for the often tough regulations applied to installing surveillance systems, such as security cameras, and the use of body worn cameras (BWC) by law enforcement personnel.

Generally, a decision to start recording of surveillance data, i.e., a decision to instruct the surveillance system to store video material being captured, can be taken automatically, for instance based on image analytics or time of day, or it could be a manual decision taken for instance by an operator. The same applies to the decision to stop an ongoing recording of surveillance data.

In case of the use of a BWC there is an added complexity in that the camera may record both audio and video of activities of the wearer when recording is switched on. To safeguard privacy of the wearer, rules and processes are generally set up for when recording by a BWC must be switched on, when it may be kept switched off, and when a current recording may, or even must, be switched off.

In a situation at a scene filmed by a surveillance camera, such as a BWC, a decision is taken to start recording of the captured video sequences, for instance based on an activity happening in the scene. As mentioned above, the decision will in many cases be taken by the operator of the camera by manually starting a recording. A recording may also be triggered automatically by the surveillance system, or by a start recording instruction over a communication means to the camera or to its operator from a manager at a remote location, not seeing the situation live nor streamed in real time, and therefore not experiencing the full situation. Subsequently a decision may be taken to stop the recording a while after the activity was understood to be completed. This decision may be taken in a similar way to the start recording instruction. A reason for a decision to stop the recording in such a case may be to save recording storage space, as constant video recordings tend to result in huge storage requirements. An identified problem is that later, for instance during a crime investigation, the question may arise if something happened on the scene shortly after the recording was stopped. A situation where surveillance data as evidence could have been of importance for the investigation. The document EP 3 104 598 discloses a video surveillance system configured to record videos and encrypt these videos using different encryption keys, depending on whether they are recorded before or after a triggering event is detected.

There is therefore a problem with when and how decisions to stop recording of surveillance data are taken, also when governed by rules and processes. Manual decisions tend to include subjective elements, depending on what is judged as relevant for recording and what is not relevant and automatic decisions may not be setup to suit the current situation monitored.

There is thus room for improvements within this context.

### SUMMARY

In view of the above identified problem, the present invention provides a method for enhancing forensic capabilities in a video system and a video system for carrying out said method. In particular, it is an object of the invention to provide a method and a corresponding video system, ensuring that additional data recorded as a result of the method, is handled as personal information and only made available during well-defined and specific circumstances.

According to a first aspect of the present invention provided is a method in a video system for capturing a video sequence of image frames in a video capturing device, for processing the captured video sequence into a video stream and for recording the video stream. The video recording functionality of the video capturing device is controlled by means of a processing device of the video capturing device, receiving instructions. The method comprises receiving an instruction to start the recording of the video stream, receiving a subsequent instruction to stop the recording of the video stream, and ending the recording of the video stream. In response to receiving the instruction to stop and before stopping the ongoing recording, the video capturing device continues to record subsequent image frames captured by the video capturing device for some time after receiving the instruction to stop, and the recording is stopped after this some time. The receiving of the instruction to stop the recording of the video stream, results in identifying image frames captured during this some time for encryption with a post buffer encryption key. The method further comprises encrypting the image frames identified for encryption using the post buffer encryption key and storing the image frames of the video stream encrypted with the post buffer encryption key.

As used herein, by video capturing device is generally meant a body worn camera, BWC. The terms "video capturing device" and "BWC" are used interchangeably. The present invention is applicable for video capturing devices that capture video images continuously when powered on, in the sense that an image sensor is constantly active, and also for video capturing devices that starts to capture video images when a start recording instruction has been received, where an image sensor goes active when instructed.

As used herein, by video stream is generally meant a plurality of temporally consecutive image frames, wherein each image frame corresponds to a raw video data captured by an image sensor of the video capturing device. The image frames may be encoded using video codecs such as H.264, JPEG etc., and if applicable an image frame of the video stream may be encoded into an I-frame, P-frame or B-frame. The image frames of the video stream may in some embodiments not be encoded, but instead comprise the raw video data. Generally, a video stream comprises a plurality of image frames, each associated with a time stamp, and ordered according to the associated time stamps. A video stream may be stored as a video file.

As used herein, by encryption key is meant any known type of key used for encryption and any known handling of encryption keys may be used. The encryption key may for instance be a shared secret in a symmetric encryption process. The encryption key may be a public key, created by a public key infrastructure or a key management service in an asymmetric encryption process. Also, a combination of both may be used, where a symmetric key is encrypted using an asymmetric encryption process, or where an intermediate symmetric encryption process is used, and where a symmetric key is encrypted using an asymmetric encryption once the public key is available.

The inventive method provides a method to ensure that additional data may be recorded following a stop recording decision being taken, thereby enhancing forensic capabilities. The method at the same time ensures that this additional data is handled as personal information and only made available during well-defined and specific circumstances, thereby enhancing the privacy of the additional data collected.

In one or more embodiments the method generates a single video stream comprising the video sequence captured prior to the instruction to stop the recording and the video sequence identified for encryption with the post buffer encryption key. Such an embodiment may have the advantage that a receiver of the image frames encrypted using the post buffer encryption key will have all recorded image data available, ready to decrypt if and when a corresponding decryption key is made available to the receiver.

In one or more embodiments the method generates a separate video stream containing the identified image frames of the video sequence. Such an embodiment may have the advantage that the additional data, encrypted with the post buffer encryption key, may be stored separately, and its presence may be made known dependent on access rights. This may enhance the level of privacy.

In one or more embodiments the post buffer encryption key is predetermined. Such an embodiment, where the encryption key may be determined and made available to the video capturing device, provides for an easy and efficient encryption. In another situation, the encryption key may be dynamic, for instance calculated by a predetermined function, which may increase the security of the encryption. In yet another situation, where the encryption key is not known to the video system at the time of capture, an intermediate encryption key may be used. When the post-buffer encryption key is available an additional encryption may be carried out.

In one or more embodiments the encryption is carried out before the identified images of the video stream are displayed by use of the video capturing device or transmitted from the video capturing device. This limits the risk that the additional data is for instance displayed, used or stored before being encrypted.

In one or more embodiments the method further comprises transmitting the video stream from the BWC to a video receiving device of the video system external to the BWC, before encrypting the identified images of the video stream using the post buffer encryption key at the video receiving device. A resulting advantage with this embodiment may be that the encryption not necessarily is carried out within the video capturing device. Examples may be a case where the video capturing device has limited processing or energy resources. Another example may be where the video capturing device is physically split in an image capturing unit and an image processing unit, and where the encryption may be carried out in the image processing unit. Yet another example may be where additional data identified for encryption using the post buffer encryption key, is captured by a BWC, and the encryption is carried out by an encryption module during upload of the data at the end of a working day, for instance when connecting to a docking station. For these embodiments it may be sensible to ensure that the additional data does not leave the video system, or is accessed in any way or form, before the encryption has been carried out.

In one or more embodiments the instruction to stop the recording originates from at least one action selected from the list of:
- actuation of a switch mechanism in connection with the image capturing device,
- analysis of audio content captured at a scene;
- analysis of image content captured at a scene;
- analysis of geo-position data collected;
- analysis of signal from a motion sensor collected;
- analysis of a signal from a wired or wireless external sensor connected to the video system;
- in the case of a networked video system, analysis of content of a data package received over the network. It is a benefit of the video system that what or which actions lead to a stop instruction being generated may be configurable for the specific video system or its circumstance.

In one or more embodiments the video capturing device ends the recording of the video sequence identified for encryption using the post buffer encryption key, as a result of at least one action selected from the list of:
- receipt in the video capturing device of an instruction to start a recording of another video sequence;
- expiration of predetermined time during which encrypting using the post buffer encryption key has been carried out;
- analysis of audio content captured at a scene;
- analysis of image content captured at a scene;
- analysis of events generated within the video capturing device;
- if the video capturing device is a networked device, analysis in the video capturing device of content in a data package received over the network;
- analysis in the video capturing device of an external event. It is a benefit of the video system that what or which actions lead to an end of recording may be configurable for the specific video system or its circumstance.

In one or more embodiments the external event is an event selected from the list of:
- from a holster trigger (indicating gun inserted in holster);
- from a motion sensor (indicating that the operator of the video capturing device is standing up after a fall or has stopped running);
- from a geo-position sensor (determining that the video capturing device is located in a physical area where video capturing is regulated);
- if the video capturing device is a networked device, received by the video capturing device from another networked device. It is a benefit of the video system that what or which actions lead to an end of recording may be configurable for the specific video system or its circumstance.

In one or more embodiments the method further comprises encrypting using encrypting using asymmetric or symmetrical using shared secrets.

In one or more embodiments the post buffer encryption key is a public key of an asymmetric key pair generated by a receiver of the image frames encrypted using the post buffer encryption key.

In one or more embodiments the method further comprises receiving the post buffer encryption key in an encryption module, and activating the post buffer encryption key, in the encryption module, when encrypting the image frames of the video sequence identified for encryption with the post buffer encryption key.

In one or more embodiments the method further comprises decrypting by a decryption module at the receiver of the image frames encrypted using the post buffer encryption key, by requesting a private key, corresponding to the public key, at a key management service.

According to a second aspect of the present invention provided is a video system arranged to capture a video sequence of image frames and to record a corresponding video stream, the video system comprises a video capturing device (i.e., BWC) configured to capture the video sequence of image frames comprising, an image processing pipeline configured to generate a video stream from the captured video sequence and a processing device configured to control the video recording functionality of the video capturing device. The processing device is further configured to receive instructions such as an instruction to start the recording of the video stream and a subsequent instruction to stop the recording of the video stream. In response to receiving the instruction to stop and before stopping the ongoing recording, the processing device continues to record subsequent image frames captured by the BWC for some time after receiving the instruction to stop, and stops the recording after this some time. The video system further comprises an encryption module configured to identify subsequent image frames of the video stream captured during this some time for encryption using a post buffer encryption key, and encrypt the image frames identified for encryption using the post buffer encryption key. The system further includes a storage device configured to store the video stream encrypted using the post buffer encryption key. This particular video system arrangement will provide an adequate platform for performing the inventive method according to the embodiments where encryption using a post buffer encryption key is involved.

In one or more embodiments the video system the video system further comprises a key providing module arranged to provide a decryption key for decrypting the video sequence encrypted with the post buffer encryption key, a receiver configured to receive the encrypted video sequence encrypted with the post buffer encryption key and to decrypt the video sequence, wherein the receiver receives the decryption key from the key providing module to enable the decryption.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

### BRIEF DESCRIPTION OF THE DRAWINGS

Fig. 1 is a schematic view of a camera setup, according to a first embodiment of the present invention.
Fig. 2 is a schematic view of a camera setup, according to a second embodiment of the present invention.
Fig. 3 is a flowchart outlining the steps of the present invention, according to one or more embodiments thereof.
Fig. 4 is a flowchart outlining the steps of the present invention, according to further embodiments thereof.

### DETAILED DESCRIPTION OF EMBODIMENTS

The present invention will now be described more fully with reference to the accompanying drawings, in which embodiments of the invention are shown.

The present invention is aimed at reducing the problem described in the background section, caused by taking a decision to stop recording of surveillance data.

To set the scene by an example: A police officer collects a BWC at a police station at the start of the working day, mounts it in its holder attached to the uniform and powers on the unit. Soon our police officer is called to a scene to investigate an activity. Arriving at the scene the police officer starts a recording, according to standard procedures provided to the officer, by pressing the record button on the BWC. The camera starts to record subsequent video clips to a storage, for instance an SD card within the BWC. When the activity sometime later is sorted out, our police officer stops the recording, also according to standard procedures provided, by again pressing the record button on the BWC a second time. The BWC is however kept powered on. The police officer continues to a next job and at that scene records further video clips by starting and stopping the recording of captured video images. At the end of the day, our police officer returns the police station, docks the BWC in a docking station, where the battery of the BWC is charged and the video images recorded are transferred to a cloud storage, ready to be used during investigations, if needed.

The proposed idea of the present invention is that when the stop recording instruction is given, in the case above when our police officer presses the recording button the second time, the camera may continue to record video images for some time, creating post buffer video clips. Whether the recording continues, or not, may be determined by configurable rules specific for this camera or this camera system. The length of the post buffer video clips may also be defined by configurable rules. These post buffer video clips are encrypted using a specific post buffer encryption key. A corresponding post buffer decryption key is kept safe, for instance by a key management service, and only made available on instruction by for instance a judge or a court.

The invention proposed is not intended to change the experience for our police officer. What will change is that the surveillance camera may, in certain circumstances depending on set rules, record an increased amount of video material and encrypt this material with a very specific encryption key. In most cases the additionally recorded video material will contain no useful information and will never be requested, never decrypted, and never reviewed. The invention gives an opportunity to present further video material available to an investigation, if requested for instance by a judge in a court case, while at the same time safeguarding privacy and confidentiality for the individual carrying the BWC.

In the example above, at the first scene, shortly after the recording was stopped something happened at the scene that our officer at the time did not connect with the handled activity, resulting in that the recording was not restarted. However later, during investigation of a criminal case related to the activity handled, it was realized that what happened at the scene, after the recording was stopped, could in fact be of high importance. With the invention proposed, the further post buffer material may be requested and, if set requirements are fulfilled, decrypted.

For this invention a surveillance camera may be a wearable camera, such as a body worn camera, BWC, as in the example above, capturing video images of the scene where the wearer moves about. It may also be a camera mounted permanently or temporarily at a certain location, monitoring a certain scene. The present invention is applicable for surveillance cameras that captures video images continuously when powered on, as in the example above. It is also applicable for cameras that starts to capture video images when a start recording instruction has been received.

Here follows a description of various embodiments according to the present invention. It should be noted that where an example below discusses a solution for a video stream comprising image frames, the present disclosure is equally suitable for being used for an audio stream comprising audio samples (i.e., captured by a microphone), or a combination of a video and an audio stream.

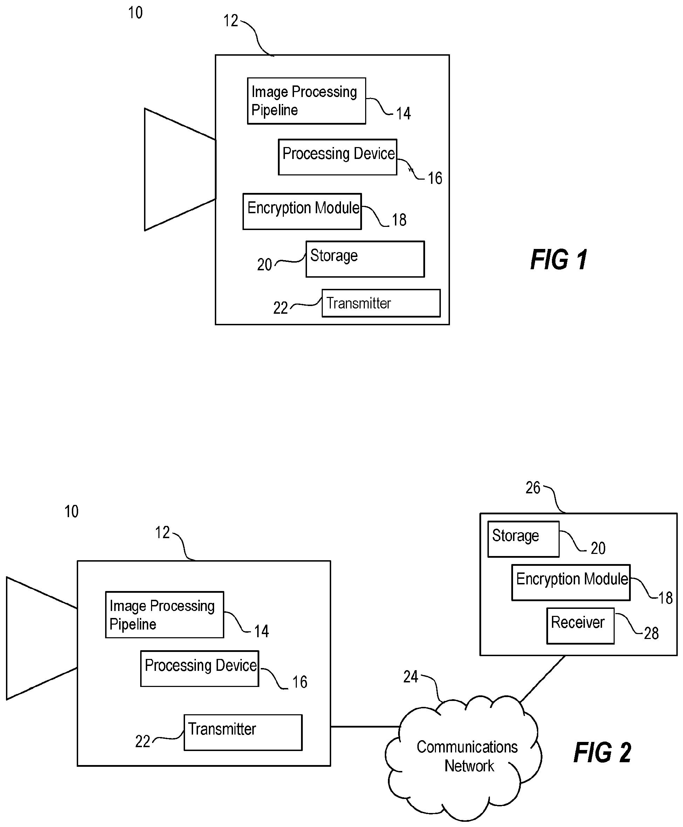

Fig. 1 shows by way of example a schematic drawing of a video capturing device/BWC 12, being a part of a video system 10 performing the present invention according to various embodiments. The video capturing device 12 is configured to capture a video sequence of a scene. The video sequence is received by an image processing pipeline 14 configured to generate a video stream of the captured video sequence. The image processing pipeline 14 may be embodied by an ARTPEC chipset produced by Axis Communication AB. Any other suitable chipset or software may be used. It should be noted that the image processing pipeline 14 may generate several video streams from the same video sequence.

The video capturing device 12 further comprises a processing device 16 configured to control a video recording functionality of the video capturing device 12. The processing device 16 is configured to receive an instruction to start a recording of the generated video stream. The processing device 16 is further configured to receive a subsequent instruction to stop the recording of the generated video stream. The instructions to start and to stop the recording originates from an action or event identified by the video capturing device 12. Either of the two instructions, or both, may originate from outside the processing device 16, for instance either may originate from a switch mechanism or button located in connection with the video capturing device 12, e.g., on the housing of, or external to, the video capturing device 12, or from a separate sensor, internal or external to the video capturing device 12, e.g., a geo position sensor or a motion sensor. One, or both instructions, may originate from the video system 10 to which the video capturing device 12 may be connected via a communications network, or be controlled by a timer located internally of the video capturing device 12, or externally and connected to the video capturing device 12. The instruction to start or stop the recording received by the processing device 16 may originate from inside the processing device 16, for instance from an image and/or audio analytics algorithm generating events. The processing device 16 may be implemented in either software or hardware or a combination of both and may for instance be integrated in the same chip as the image processing pipeline 14.

The video capturing device 12 further comprises an encryption module 18 configured to, in response to receiving an instruction to stop the recording of the video stream, identifies subsequent image frames of the video stream for encryption using a post buffer encryption key based on a defined set of rules, and subsequently encrypt the identified image frames. Any known type of encryption and any known handling of encryption keys may be used. The encryption may for instance use shared secrets in that a symmetric encryption is used. The encryption may for instance be asymmetric where a post buffer encryption key may be a public key, created by a Public Key Infrastructure or a key management service, and may be held by an assigned control body. The assigned control body may be an office assigned by a state, such as the police or a court. The assigned control body may be a company producing or using video systems or video capturing devices or a company selling services related to these systems. The encryption module 18 may be implemented in either software or hardware or a combination of both and may for instance be integrated in the same chip as the image processing pipeline 14.

The private key, corresponding to the public key, may be made available by the control body to for instance a court or a prosecutor's office during a criminal investigation for decrypting. Decrypting, by a decryption module at a receiver configured to receive the image frames being encrypted using the post buffer encryption key, may be carried out by requesting the private key, corresponding to the public key, at the key management service or at the assigned control body.

The asymmetric key pair may be generated on request from an intended receiver configured to receive the image frames encrypted using the post buffer encryption key. The key generation may be carried out by for instance a producer of the video capturing device 12, an external control body handling asymmetric keys, a court or a prosecutor's office. As a more efficient alternative, the encryption may be symmetric and the key to decrypt the symmetrically encrypted image frames may be encrypted using asymmetric encryption according to a well-known manner.

In one set of embodiments the encryption using the post buffer encryption key is carried out before the identified images of the video stream are displayed by use of a display integrated in the video capturing device 12 or a display connected to the video capturing device 12, and also before transmitted from the video capturing device 12.

The video capturing device 12 further comprises a storage 20 configured to store the video stream encrypted using the post buffer encryption key. The storage 20 is a non-volatile memory, and may be a local storage, for instance a removable Secure Digital, SD, card, or it may be external to the video capturing device 12, such as a networked storage unit or cloud storage. The storage 20 may also store image frames of the video stream that are not identified for encryption using the post buffer encryption key. These may be image frames in the current video sequence captured before the instruction to stop was received by the processing device 16, and these may also be image frames captured in a subsequent video sequence where an instruction to start recording was received by the processing device 16. The image frames not encrypted using the post buffer encryption key may be encrypted using another encryption key, and the image frame encrypted using the post buffer encryption key may again be encrypted using another encryption key. An example of this is where the storage 20 is an SD card where the process of encrypting all data during storing is implemented.

The video system 10 may, as mentioned, also comprise a receiver configured to receive the image frames being encrypted using the post buffer encryption key. The receiver may also be configured to receive unencrypted image frames as well as image frames encrypted with other encryption keys. The receiver may also be part of another video system. The video system 10, comprising the receiver, further comprises a key providing module arranged for providing the decryption key for decrypting the image frames encrypted with the post buffer encryption key. The receiver hence is configured to receive the video sequence encrypted with the post buffer encryption key and to decrypt the video sequence using the decryption key received from the key providing module.

Fig. 2 shows by way of example a schematic drawing of a video capturing device 12, being a part of a video system 10 performing the present invention according to other embodiments, where the same devices have the same numbering as in Fig. 1. Here the video stream, generated by the image processing pipeline 14, is transmitted, by a transmitter 22, over a communications network 24 to a video receiving device 26, where a receiver 28 forwards the video stream to an encryption module 18 performing the same functions as previously described. The communications network may be a local area network, wired or wireless, or it may also be a wide area network, such as the internet. The video receiving device 26 also comprises a storage 20, performing the same functions as previously described.

In the embodiment depicted in Fig.2, the video stream is transmitted from the video capturing device 12 before encrypting the identified images of the video stream with the post buffer encryption key. Hence, the encryption is not carried out in the video capturing device 12, but rather in a video receiving device 26 that may be physically close or remote to the video capturing device 12. A requirement may be that the video capturing device 12, the communications network 24 and the video receiving device 26, comprising the encryption module 18, are under the control of the same entity so that it can be ensured that the images of the transmitted video stream is not made available for displaying or storing before handled by the encryption module 18. In this embodiment the captured video sequence may be transmitted to the receiving device 26 either in uncompressed or compressed format, where the video encoding functionality of the imaging processing pipeline 14 may in the first instance be comprised within the receiving device 26 and within the video capturing device 12 in the second.

As previously described in connection with Fig.1, the video stream produced by this split configuration of the video capturing device 12 and the receiving device 26, may also be decrypted by a receiver configured to receive the image frames being encrypted using the post buffer encryption key, in the same way as previously described.

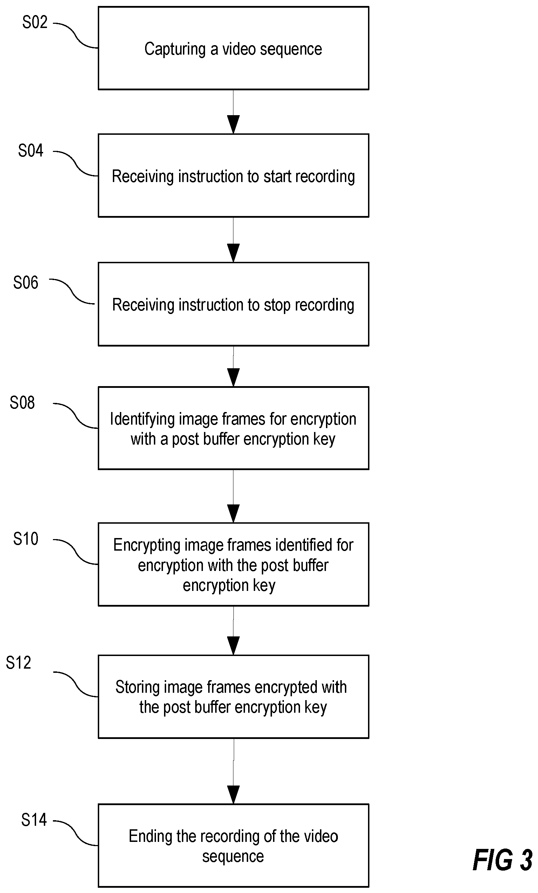

Fig. 3 is a flowchart illustrating various embodiments of a method according to the present invention. In a first step S02 a video sequence is captured of a scene by an image sensor of a video capturing device 12, being part of a video system 10. The capturing of the video sequence may be continuous, in that the image sensor is active and producing a video sequence as long as the video capturing device 12 is powered on, alternatively the capturing may be started and stopped by instructions to a control unit controlling the image sensor. As discussed previously the captured video sequence may be processed by an image processing pipeline 14 configured to generate a video stream of the captured video sequence.

In a second step S04 an instruction to start recording of the video stream is received by a processing device 16 of the video capturing device 12. The start recording instruction results in that the video stream is stored in a storage 20, which may be local to the video capturing device 12, as shown in Fig.1 or remote, for instance in a video receiving device 26, as shown in Fig.2, ready to be sent to a receiver.

In a third step S06 an instruction to stop recording of the video stream is received by a processing device 16 of the video capturing device 12. As mentioned previously, the stop recording instruction may originate from a number of actions or events identified by the video capturing device 12. These actions or events may be generated in several of ways. A switch mechanism in connection with the video capturing device 12 may be activated by an operator of the video capturing device 12. A recording button on the housing of a BWC may be pressed or pressed in a predefined way, e.g., keeping the button pressed for 3 seconds or pressing twice. A power-on switch of the video recording device 12 may be deactivated to power off the device, and at the same time the stop recording instruction is generated. An analysis of audio content captured at the scene, either captured by the video capturing device 12 itself or by another unit in the video system 10, may result in that a sound pattern is identified, e.g. a voice saying "stop recording" or where the captured sound level previously was detected as high (an event that may generate a start recording instruction) and now detected as below a certain threshold, may result in a stop recording instruction being generated. An analysis of image content captured at the scene, either captured by the video capturing device 12 itself or by another image capturing device in the video system 10, may result in that a stop recording instruction being generated. This may for instance be detection of a person in a designated area where video recording of people is not allowed as defined by law or by the owner of the video system 10, or that the image quality is too low for recording being worth-while. An analysis of events generated within the video capturing device 12, such as low battery level or low storage level may result in a stop recording instruction being generated. An analysis of geo-position data collected, captured by the video system 10, may result in a stop recording instruction being generated. This may for instance be in the case of a BWC where the wearer has moved into a geographical area where no video recording is allowed by law or by decision by the video system owner. The geo-position data may originate from a position sensor with the video recording device 12 or it may be deduced from image analytics carried out in the video recording device 12 or elsewhere in the video system 10. An analysis of collected signal from a motion sensor, captured by the video capturing device 12 or by the video system 10, may result in that a stop recording instruction being generated. This may for instance be in the case of a BWC where the wearer previously was detected as fallen to the ground, an event that may generate a start recording instruction, and now detected as again standing up, or where the wearer previously was detected as running, also an event that may generate a start recording instruction, and now the wearer is detected as slowing down or standing still. An analysis of signals from a wired or wireless external sensor connected to the video system 10 may result in that a stop recording instruction being generated. This may for instance be in the case of a thermometer that previously detected abnormal temperatures and now detects normal temperatures. In the case of a networked video system, an analysis of data package content received over the network by the video system, may result in that a stop recording instruction being generated. This may for instance be in the case of a received instruction to stop recording from a controlling device connected to the same network.

Depending on the rules setup for the specific video system, the stop recording event may be generated based on either a single action or event, or a combination of actions and/or events.

In a fourth step S08 comprises a process of identifying image frames for encryption with a post buffer encryption key. In this step image frames of the video stream, corresponding to the processed video sequence captured, subsequent to the receipt of the stop recording instruction, are identified for encryption. Once the stop recording instruction has been received it has, in one set of embodiments, been determined that all subsequent image frames of the video stream are identified for encryption with the post buffer encryption key, until the recording is ended in method step S14. In another set of embodiments, once the stop recording instruction has been received, an additional intelligence, for instance in the encryption module 18, identifies certain image frames for encryption based on one or more rules defined for the specific video system 10. For example, images for encryption with the post buffer encryption key may be identified based on audio or image analyses, e.g., images where object or motion is detected or where the sound level is above a certain threshold are identified for encryption with the post buffer encryption key, but other image frames are not. In the same way geo-position data, motion sensor data, signals from external sensors or content of received data package over the network may be analyzed to determine that there likely is content in the captured image frame that may be interesting from a surveillance perspective, and this is identified for encryption with the post buffer encryption key, but other image frames are not. The image frames identified for encryption may also be analyzed for instance using object or face detection, and those that contain private information are identified for encryption using a post buffer encryption key and other image frames are not. Image frames captured subsequent the stop recording instruction but not identified for encryption, may either be dropped or added to an image stream as not encrypted image frames. In this way there will be less waste of processing resources used for encryption when not needed. This will also ensure that recordings encrypted with the post buffer encryption key are kept relevant, avoiding indicating to a possible future prosecutor that there may be further relevant material available when there in fact is not.

In a fifth step S10 the image frames identified for encryption are encrypted using the post buffer encryption key. As mentioned in connection with Fig.1 any encryption scheme may be used, for instance asymmetric, encrypting using public key and decrypting using private key, or symmetrical, encrypting using shared secrets. The public encryption key of the asymmetric key pair, and the private key for decrypting, may be generated, or be requested to be generated, by a receiver of the image frames encrypted using the post buffer encryption key. The post buffer encryption key may be received and activated in the encryption module 18, before the image frames of the video sequence identified for encryption with the post buffer encryption key are encrypted. The encrypting step S10 of the method may further comprise storing the post buffer encryption key in memory of the encryption module 18 carrying out the encryption together with a key-id of the post buffer encryption key. The key-id and other encryption related data, for instance a timestamp, may be included in the encrypted video stream for instance as metadata, enabling the receiver configured to receive the image frames being encrypted using the post buffer encryption key to use the correct decryption key having the same key-id and thereby correspond to the post buffer encryption key used. The post buffer encryption key may at the time of encryption be received over a network to which the video capturing device 12 or the video receiving device 26 is connected or during an initial configuration of the device. The post buffer encryption key used may be different for different image frames, for different chunks of a video stream and/or for different video streams or it may be one specific key for a specific video system and therefore the same for several video streams. An image frame, or part of a video stream, may be encrypted using multiple and different post buffer encryption keys enabling the need for a decision to decrypt to come from two different sources, such as both a regional and a federal court, each holding one of the corresponding decryption keys. The post buffer encryption key may be predetermined, and as detailed above, for instance stored in the encryption module 18. However, if the video system 10 is not aware of the recipient of the video information at the time of encryption by the encryption module 18, and consequently also not aware of any encryption keys the recipient may require, an intermediate encryption may be carried out by the encryption module 18. This intermediate encryption may for instance be a symmetric encryption with keys stored or calculated locally in the encryption module 18. The encryption as stipulated by the recipient may be carried out at a later stage. An example may be a BWC capturing video sequences out in the field, when not connected to a communications network and therefore not being able to receive a relevant post buffer encryption key. The encryption module 18 may in this carry out an intermediate encryption in the field. At the end of the day, when the BWC is docked in the docking station connecting the BWC to the video system 10, it receives the post buffer encryption keys required from the recipient, for instance a Video Management System, and an encryption by the encryption module 18, for instance of the symmetrically keys used in the intermediate encryption, may be carried out.

It is important that the image frames identified for encryption using the post buffer encryption key are handled with strict confidentiality before encrypted. As previously described, in connection with Fig.1, in one set of embodiments the identified image frames are encrypted before displayed and before transmitted from the video capturing device 12. A video capturing device with a built-in display unit to display the captured image stream, will send the image stream to the display unit after the identified image frames have been encrypted with the post buffer encryption key. The same would apply to a display directly connected to the video capturing device 12.

In another set of embodiments, described in connection with Fig.2, the identified image frames are transmitted from the video capturing device 12 before encryption by the video receiving device 26. If, in these embodiments, the video capturing device 12 has a built-in display unit to display the captured image stream, or a display directly connected to the video capturing device 12, the step of identifying image frames for encryption with a post buffer encryption key S08, may be carried out within the video capturing device 12 before transmitting the frames to the video receiving device 26 for encryption. A display controller may be implemented, for instance within the video capturing device 12, having a function to check each of the image frames before transmitting to the display unit. Image frames flagged or otherwise marked as identified for encryption are not displayed.

Also, for the set of embodiments described in connection with Fig.2, if the image frames are transmitted from the video capturing device 12 before encryption by another device, such as the video receiving device 26, it is important that the communication between the two devices is secured to ensure that the image stream is not displayed, recorded, or used in any other way, before the encryption has been completed.

In a sixth step S12 the image frames encrypted using the post buffer encryption key are stored.

In a last and seventh step S14 the recording of the video stream generated from the captured video sequence is ended and the recording of further continuously captured video sequences may start again following a receipt of another start recording instruction S04. Alternatively, if the capturing of the video sequence in the meantime also was ended for instance by an instruction received to the image sensor control unit or when the video capturing device 12 was powered off and then again powered on, the method may start again from the beginning by the start of capturing a new video sequence S02.

Following the receipt of the start recording instruction S04 by the processing device 16 the captured image frames are processed and encoded by the image processing pipeline 14 into an image stream. The captured image frames may in one set of embodiments be composed in for instance 5min chunks of image stream and forwarded to the storage 20. Following the receipt of the stop recording instruction S06, and, depending on the rule set of the specific video system, after image frames for encryption with a post buffer encryption key have been identified S08, the identified image frames may be added to the same video stream, or a current chunk of the same video stream, as the image frames not identified for encryption. In another set of embodiments, the identified image frames may be added to a separate image stream, or to separate chunks of image streams. This results in that, in the embodiment where identification and encryption are carried out in the video capturing device 12 according to Fig.1, image frames encrypted using a post buffer encryption key may be included in the same image stream, or in the same chunk of an image stream, as image frames not encrypted using a post buffer encryption key, or image frames encrypted using a post buffer encryption key may be included in a separate image stream, or to separate chunks of a separate image stream.

In an above described embodiment where the identification of image frames for encryption using the post buffer encryption key, is carried out in the video capturing device 12 and then transmitted to the video receiving device 26 for encryption, the identified image frames may be added to the same image stream, or to the same chunks of an image stream, as the image frames not identified, or to a separate image stream, or to separate chunks of an image streams, and then transmitted to the video receiving device 26.

In this way the method according to the present invention may in one set of embodiments generate a single video stream comprising the video sequence captured after the start recording instructions is received and including any recording after a subsequent stop recording instruction is received until the end of the recording of the video sequence, including any image frames identified for encryption with the post buffer encryption key. This results in that any part of the video sequence consisting of image frames identified for encryption with a post buffer encryption key, and consequently encrypted with this key, will be included, and stored in the same output video stream as parts of the image frames of the video sequence not identified for encryption with a post buffer encryption key.

A receiver configured to receive the image frames being encrypted using the post buffer encryption key, will in the single video stream be able to freely use the image frames not encrypted using the post buffer encryption key, including the image frames encoded with any other encryption keys for which the receiver has access to a corresponding decryption key. To access the image frames encrypted with the post buffer encryption key the receiver needs to request access to the corresponding decryption key by the authority or control body responsible for its safe keeping as discussed earlier. Typically, a court order or a request from a prosecutor would give access to the necessary key. As the two types of image frames are collected in the same output image stream, and not separated, keeping track of from which situation and/or time slot the image frames encrypted with the post buffer encryption key belong is made easy.

In another set of embodiments, a separate video stream may be generated, containing the image frames of the video sequence identified for encryption using a post encryption key, and hence encrypted with the post buffer encryption key, being different from a video stream containing the image frames not identified for encryption using the post buffer encryption key. The identified image frames would, in the case where the encryption module 18 is located within the video capturing device 12, be encrypted in an output stream leaving the video capturing device 12, meanwhile in the case where the encryption module 18 is located in a video receiving device 26, the identified image frames in the separate video stream would not be encrypted when leaving the video capturing device 12, but first when leaving the video receiving device 26.

As in the previous case, where the encrypted and the not encrypted image frames composed in the same output image stream, a receiver configured to receive the image frames being encrypted using the post buffer encryption key, needs to request access to the corresponding post buffer decryption key. In an embodiment where separate video streams for frames encrypted using the post buffer encryption key and for frames not encrypted using the post buffer encryption key, links may be generated so that the receiver of the encrypted image frames, may determine that and how the separate image streams are related. The link may be implemented as a time stamp of the image frames, together with the id of the video capturing device 12 or that the video streams are part of the same manifest file. This may result in that the receiver configured to receive the video streams, will index video frames of both video streams having subsequent time stamps, or being part of the same manifest file, next to each other in the receiving component, or be given database indexes next to each other or be placed in the same folder. The link may be implemented by the video system uploading the separate video streams to the same cloud object storage.

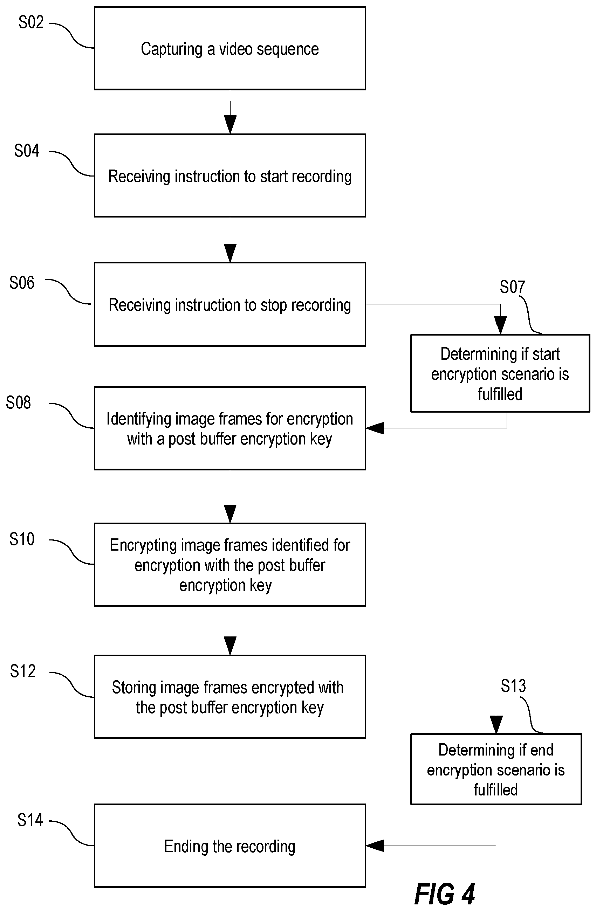

Fig. 4 is a flowchart illustrating other embodiments of a method according to the present invention. The steps of capturing a video sequence S02, receiving instruction to start recording S04 and receiving instruction to stop recording S06 a corresponding video stream are the same as described in connection with Fig. 3. In addition, before the step of identifying image frames for encryption with a post buffer encryption key S08, the method may comprise a step of determining if start encryption scenario is fulfilled S07, i.e., checking a criterion for when recording using encryption with the post buffer encryption key should start. This may be determined based on one or more rules specific for the current video system 10. The decision to start recording with encryption using the post buffer encryption key may, in combination with the receipt of the stop recording instruction, originate from a number of actions or events and be generated in a number of ways and as already mentioned, be governed by a corresponding rule. That a recording of a video stream, before receiving the instruction to stop the recording, has continued longer than a predetermined time may result in the start of recording with encryption using the post buffer encryption key S10. The length of the predetermined time may be static or dynamic, and where dynamic, either manually configurable or set by the system depending on for instance system performance or environmental parameters. In this way short recordings started by mistake and then stopped, or recordings stopped more or less immediately after they were started for other reasons, are not encrypted with the post buffer encryption key and will therefore not waste corresponding processing resources when not needed. This will also ensure that recordings encrypted with the post buffer encryption key are kept relevant and not indicating to a possible future prosecutor that there may be further relevant, but encrypted, material available. That an event was ongoing or generated, within the video capturing device 12, within a time period immediately before the time when the instruction to stop the recording was received, where the time period is shorter than a predetermined time period, may also result in the start of recording with encryption using the post buffer encryption key. Also here, the length of the predetermined time period may be static or dynamic, and where dynamic, either manually configurable or set by the system depending on for instance system performance or environmental parameters. The ongoing or generated event may be an event internal or external to the video capturing device 12. The event may originate from a holster trigger, indicating that a gun has been drawn, it may be an event from a motion sensor, indicating that the wearer of the BWC has fallen or is running, it may be an event from a heart rate monitor measuring the heart rate of the BWC wearer or the camera operator showing that the heart rate has increased. All these events may indicate that there is an ongoing happening that may be worthwhile recording. It may be an event from a geo-position sensor, indicating that the video capturing device 12 for instance is located in, or that the video capturing device 12 captures images of, a physical area where for instance rules and processes stipulates that recording is a must, or if the video capturing device 12 is a networked device, it may be an event received by the video capturing device 12 or the video system 10 from another networked device. The ongoing or generated event may be an image analytics event generated within the video recording device 12, for instance as a result of object tracking, motion detection or object detection in the captured video sequence for which the recording has started. The benefit of arranging a rule combining the receipt of a stop recording instruction with an ongoing or generated event, determining when to start recording with encryption using the post buffer encryption key, will reduce the waste of processing resources for encryption when not needed. This will also result in that a recording, encrypted with the post buffer encryption key, is kept relevant and not indicating to a possible future prosecutor that there may be further relevant material available and, in this way, saving different kinds of costs.

In a video system 10 where a rule is defined saying that the encryption with the post buffer encryption key starts only based on the stop recording instruction in combination with actions and/or events, and that rule is not fulfilled, the video stream is not encrypted using the post buffer encryption key when the stop recording instruction is received. Instead, the recording of the video stream is ended.

After the step of determining if start encryption scenario is fulfilled S07, the method in Fig.4 continues with the step of identifying image frames for encryption with the post buffer encryption key S08, the step of encrypting image frames identified for encryption with the post buffer encryption key S10 and the step of storing image frames encrypted with the post buffer encryption key S12, all the same as the corresponding steps in Fig. 3 and as previously described. Before the step of ending the recording of the video stream generated from the captured video sequence S14, the method may comprise a step of determining if end encryption scenario is fulfilled S13, i.e., checking a criterion for when recording using encryption with the post buffer encryption key should end. This may be determined based on one or more rules specific for the current video system 10. The decision to end recording with encryption using the post buffer encryption key may originate from a number of actions or events and be generated in a number of ways and be governed by corresponding rules. These rules may correspond to the rules determining to start the encryption using the post buffer encryption key, or they may be unrelated to these. That a predetermined time during which the encryption using the post buffer encryption key must be carried out has expired, or that the amount of video data encrypted has reached a predetermined level, may result in ending of the recording with encryption using post buffer encryption key. The term predetermined may here mean both static or dynamic, and where dynamic includes either manually configurable or set by the system depending on for instance system performance or environmental parameters. In this way no subjective decision has to be taken, for instance based on environmental aspects, to end the recording. On the other hand, in many situations this may result in additional, and possibly irrelevant video data, being recorded and requiring additional storage space that may never be of use. An analysis of audio content captured at the scene, either captured by the video capturing device 12 itself or by another unit in the video system 10, may result in a decision to end the recording using encryption with the post buffer encryption key. This may be due to that a certain sound pattern is identified, e.g., that previously high-volume sound decreased or stopped. An analysis of image content captured at the scene, either captured by the video capturing device 12 itself or by another image capturing device in the video system 10, may also result in a decision to end the recording using encryption with the post buffer encryption key. This may for instance be due to that an object or person previously was detected in an area where video recording of people is not allowed, as defined by law or by the owner of the video system, but now has moved out of the area. An analysis of an event, generated within the video capturing device 12, may also result in a decision to end the recording using encryption with the post buffer encryption key. This may for instance be an event indicating that storage or battery level is running short, an event from a motion sensor indicating that the wearer of a BWC is standing up again after a previous fall, or that the wearer has stopped running. It may for instance be an event from a geo-position sensor, internal to the video capturing device 12, indicating position, and where an analysis of the sensor data determines that the video capturing device 12 now is located in, or now is capturing video images of, a physical area where video capturing is regulated, or is no longer capturing video images of a physical area where rules and processes stipulate that recording is a must. If the video capturing device 12 is a networked device, an analysis in the video capturing device 12 of content of a data package received over the network may also result in a decision to end the recording using encryption with the post buffer encryption key. This may for instance be due to that an instruction to end the recording is received, or an event has been received indicating a storage or network problem. There may also be events generated external to the video capturing device 12, for instance originating from wired or wireless external sensors connected to the video system 10 where an analysis of the event results in a decision to end the encryption. Examples may be an event from a holster trigger, indicating that a gun is re-inserted in the holster, an event from a motion sensor, for instance, as also mentioned above, indicating that the wearer of a BWC is standing up again after a previous fall, or the wearer has stopped running. Other examples of events where an analysis results in a decision to end the encryption with a post buffer encryption key may be an event from an external geo-position sensor resulting in the same decision as detailed earlier. If the video capturing device 12 is a networked device, an event may be received by another networked device, of the types already described or others, and an analysis in the video capturing device 12 of the event received over the network may also result in a decision to end the recording using encryption with the post buffer encryption key.

A receipt by the video capturing device 12, or by the video system 10, of an instruction to start a recording of a subsequent video stream S04, corresponding to a subsequent captured video sequence S02, may also result in a decision to end the encryption with the post buffer encryption key of the current video stream S13, and to end the recording of the current video stream S14. Alternatively, if the video capturing device 12 is able to handle recording of several video streams, recording of a new video stream may start meanwhile the encrypted recording of the previous image stream continues, if it has not been determined to end the current recording.

All decisions to end the encryption with the post buffer encryption key will also result in ending the recording of the currently handled video stream, corresponding to the captured video sequence S14. However, it may, depending on setup rules, be determined to end the encryption using the post buffer encryption key S13 and the recording S14, only to immediately according to another rule, generate an instruction to start a subsequent recording S04, where no encoding using the post buffer encryption key will be carried out, as no stop recording instruction has been received following the start recording instruction. An example may be where a BWC receives a stop recording instruction and the rules for instance stipulates a predetermined time during which the encryption using the post buffer encryption key must be carried out, e.g. 60 seconds S08. However, after 30 seconds the BWC enters a physical area where another system rule stipulates recording as mandatory. Hence, the system generates a start recording instruction S04, resulting in that it is determined that an end encryption scenario is fulfilled S13, as a start recording instruction S04 was received.

To summarize parts of the described method according to various embodiments of the invention, the method comprises optional steps where a decision for encryption of captured image frames using a post buffer encryption key may be taken based on a rule, or a set of rules, determined for each specific video system 10. The rule, or the set of rules, may be determined and configured by the producer of the video system, by the owner of the video system, the rule may be specified by national law and configured accordingly.

Initially a rule is setup for determining whether a stop recording instruction has been generated. Once it is determined that a stop recording instruction is generated, in one set of embodiments, all image frames following the stop recording instruction are encrypted until an end encryption decision is fulfilled.

Alternatively, a rule may optionally be setup for deciding to encrypt subsequent image frames or not, i.e., a rule stipulating that when a stop instruction is generated and a first additional condition is fulfilled, will result in encryption. Once it has been determined that the additional condition for encryption is fulfilled yet another rule may be setup for identifying which image frames to encrypt, i.e., a rule stipulating that when a stop instruction is generated, and that optionally a first additional encryption conditions is fulfilled, and that also an optional second additional condition is fulfilled, will result in that an image frame is identified for encryption.

Also, to summarize the later part of the described method according to various embodiments of the invention, the method comprises a decision for ending the encryption of identified image frames using a post buffer encryption key, and for some embodiments at the same time ending the recoding, based on a rule, or a set of rules, determined for each specific video system 10. Therefore, a rule may be setup for determining to end the encryption of the identified image frames. A rule may also and optionally be setup for determining when to end the recording of the video stream corresponding to the captured video sequence.

## Claims

1. A method in a video system (10) for capturing a video sequence of image frames in a body worn camera, BWC, (12), for processing the captured video sequence into a video stream and for recording the video stream, wherein the video recording functionality of the BWC is controlled by means of a processing device (16) of the BWC receiving instructions, the method comprising:
receiving an instruction to start the recording of the video stream and
receiving a subsequent instruction to stop the recording of the video stream;
in response to receiving said instruction to stop and before stopping said ongoing recording, continuing to record subsequent image frames captured by the BWC for some time after receiving said instruction to stop;
stopping (S14) the recording of the video stream after said some time;
identifying (S08) image frames of the video stream captured during said some time for encryption with a post buffer encryption key;
encrypting (S10) the image frames identified for encryption using the post buffer encryption key and
storing (S12) the image frames of the video stream encrypted with the post buffer encryption key.

2. A method according to claim 1 further comprising:
generating a single video stream comprising the video sequence captured prior to the instruction to stop the recording and the image frames identified for encryption with the post buffer encryption key, or
generating a separate video stream containing the image frames encrypted with the post buffer encryption key.

3. A method according to any of the preceding claims wherein the post buffer encryption key is predetermined.

4. A method according to any of the preceding claims wherein the encryption is carried out by the BWC before the identified images of the video stream are displayed by use of the BWC or transmitted from the BWC.

5. A method according to any one of claims 1 to 3, further comprising:
transmitting the video stream from the BWC to a video receiving device (26) of the video system external to the BWC, before encrypting the identified images of the video stream using the post buffer encryption key at the video receiving device.

6. A method according to any of the preceding claims wherein the instruction to stop the recording originates from at least one action selected from the list of:
- actuation of a switch mechanism in connection with the BWC,
- analysis of audio content captured at a scene;
- analysis of image content captured at a scene;
- analysis of geo-position data collected;
- analysis of signal from a motion sensor collected;
- analysis of a signal from a wired or wireless external sensor connected to the video system;
- in the case of a networked video system, analysis of content of a data package received over the network.

7. The method according to any of the preceding claims wherein the BWC ends the recording of the video sequence identified for encryption using the post buffer encryption key, as a result of at least one action selected from the list of:
- receipt in the BWC of an instruction to start a recording of another video sequence;
- expiration of predetermined time during which encrypting using the post buffer encryption key has been carried out;
- analysis of audio content captured at a scene;
- analysis of image content captured at a scene;
- analysis of events generated within the BWC;
- if the BWC is a networked device, analysis in the BWC of content in a data package received over the network;
- analysis in the BWC of an external event.

8. The method of claim 7 wherein the external event is an event selected from the list of:
- from a holster trigger (indicating gun inserted in holster);
- from a motion sensor (indicating that the operator of the BWC is standing up after a fall or has stopped running);
- from a geo-position sensor (determining that the BWC is located in a physical area where video capturing is regulated);
- if the BWC is a networked device, received by the BWC from another networked device.

9. The method of any of the preceding claims further comprising:
encrypting using asymmetric or symmetrical using shared secrets.

10. The method of any of the preceding claims wherein the post buffer encryption key is a public key of an asymmetric key pair generated by a receiver of the image frames encrypted using the post buffer encryption key.

11. The method of any of the preceding claims further comprising:
receiving the post buffer encryption key in an encryption module, and
activating the post buffer encryption key, in the encryption module, when encrypting the image frames of the video sequence identified for encryption with the post buffer encryption key.

12. The method of claim 10 further comprising:
decrypting by a decryption module at the receiver of the image frames encrypted using the post buffer encryption key, by requesting a private key, corresponding to the public key, at a key management service.

13. A video system (10) arranged to capture a video sequence of image frames and to record a corresponding video stream, the video system comprising:
a body worn camera, BWC, (12) configured to capture the video sequence of image frames, comprising:
an image processing pipeline (14) configured to generate a video stream from the captured video sequence;
a processing device (16) configured to control the video recording functionality of the BWC and to:
receive an instruction to start the recording of the video stream;
receive a subsequent instruction to stop the recording of the video stream,
in response to receiving said instruction to stop and before stopping said ongoing recording, continue to record subsequent image frames captured by the BWC for some time after receiving said instruction to stop, and
stop the recording of the video stream after said some time;
wherein the video system further comprises:
an encryption module (18) configured to identify subsequent image frames of the video stream captured during said some time for encryption using a post buffer encryption key, and encrypt the image frames identified for encryption using the post buffer encryption key, and
a storage device (20) configured to store the video stream encrypted using the post buffer encryption key.

14. The video system according to claim 13 wherein the video system further comprises:
a key providing module arranged to provide a decryption key for decrypting the video sequence encrypted with the post buffer encryption key;
a receiver configured to receive the encrypted video sequence encrypted with the post buffer encryption key and to decrypt the video sequence, wherein the receiver receives the decryption key from the key providing module to enable the decryption.

15. A body worn camera, BWC (12), comprising means to implement the method of any of claims 1-11.

## Patentansprüche

1. Verfahren, in einem Videosystem (10), zur Erfassung einer Videosequenz von Bildrahmen in einer am Körper getragenen Kamera (body worn camera - BWC) (12), zur Verarbeitung der erfassten Videosequenz in einen Videobildstrom und zur Aufzeichnung des Videobildstroms, wobei die Videoaufzeichnungsfunktionalität der BWC mittels einer Verarbeitungsvorrichtung (16) der BWC, die Anweisungen empfängt, gesteuert wird, wobei das Verfahren Folgendes umfasst:
Empfangen einer Anweisung zum Beginnen der Aufzeichnung des Videobildstroms und
Empfangen einer nachfolgenden Anweisung zum Anhalten der Aufzeichnung des Videobildstroms;
in Reaktion auf das Empfangen der Anweisung zum Anhalten und vor dem Anhalten der laufenden Aufzeichnung, Fortsetzen des Aufzeichnens nachfolgender, durch die BWC erfasster Bildrahmen für eine gewisse Zeit nach dem Empfangen der Anweisung zum Anhalten;
Anhalten (S14) der Aufzeichnung des Videobildstroms nach der gewissen Zeit;
Identifizieren (S08) von während der gewissen Zeit erfassten Bildrahmen des Videobildstroms zur Verschlüsselung mit einem Post-Puffer-Verschlüsselungsschlüssel;
Verschlüsseln (S10) der zur Verschlüsselung identifizierten Bildrahmen unter Verwendung des Post-Puffer-Verschlüsselungsschlüssels und
Speichern (S12) der mit dem Post-Puffer-Verschlüsselungsschlüssel verschlüsselten Bildrahmen des Videobildstroms.

2. Verfahren nach Anspruch 1, ferner Folgendes umfassend:
Generieren eines einzelnen Videobildstroms, umfassend die vor der Anweisung zum Anhalten der Aufzeichnung erfasste Videosequenz und die zur Verschlüsselung mit dem Post-Puffer-Verschlüsselungsschlüssel identifizierten Bildrahmen, oder
Generieren eines separaten Videobildstroms, enthaltend die mit dem Post-Puffer-Verschlüsselungsschlüssel verschlüsselten Bildrahmen.

3. Verfahren nach einem der vorhergehenden Ansprüche, wobei der Post-Puffer-Verschlüsselungsschlüssel vorgegeben ist.

4. Verfahren nach einem der vorhergehenden Ansprüche, wobei die Verschlüsselung durch die BWC durchgeführt wird, bevor die identifizierten Bilder des Videobildstroms unter Verwendung der BWC angezeigt oder von der BWC übertragen werden.

5. Verfahren nach einem der Ansprüche 1 bis 3, ferner umfassend:
Übertragen des Videobildstroms von der BWC an eine Videoempfangsvorrichtung (26) des Videosystems, die sich extern zu der BWC befindet, vor dem Verschlüsseln der identifizierten Bilder des Videobildstroms unter Verwendung des Post-Puffer-Verschlüsselungsschlüssels an der Videoempfangsvorrichtung.

6. Verfahren nach einem der vorhergehenden Ansprüche, wobei die Anweisung zum Anhalten der Aufzeichnung von mindestens einer Aktion, ausgewählt aus der folgenden Liste, stammt:
- Betätigung eines Schaltmechanismus in Verbindung mit der BWC,
- Analyse des Audioinhalts, der an einem Tatort erfasst wird;
- Analyse des Bildinhalts, der an einem Tatort erfasst wird;
- Analyse von gesammelten Geopositionsdaten;
- Analyse von Signalen, die von einem Bewegungssensor gesammelt werden;
- Analyse eines Signals von einem drahtgebundenen oder drahtlosen externen Sensor, der mit dem Videosystem verbunden ist;
- im Falle eines vernetzten Videosystem, Analyse des Inhalts eines über das Netzwerk empfangenen Datenpakets.

7. Verfahren nach einem der vorhergehenden Ansprüche, wobei die BWC die Aufzeichnung der zur Verschlüsselung unter Verwendung des Post-Puffer-Verschlüsselungsschlüssels identifizierten Videosequenz als ein Ergebnis mindestens einer Aktion, ausgewählt aus der folgenden Liste, beendet:
- Empfang, in der BWC, einer Anweisung zum Beginnen der Aufzeichnung einer anderen Videosequenz;
- Ablauf einer vorgegebenen Zeit, während der das Verschlüsseln unter Verwendung des Post-Puffer-Verschlüsselungsschlüssels durchgeführt wird;
- Analyse des Audioinhalts, der an einem Tatort erfasst wird;
- Analyse des Bildinhalts, der an einem Tatort erfasst wird;
- Analyse von in der BWC generierten Ereignissen;
- wenn die BWC eine vernetzte Vorrichtung ist, Analyse, in der BWC, des Inhalts in einem über das Netzwerk empfangenen Datenpakets;
- Analyse, in der BWC, eines externen Ereignisses.

8. Verfahren nach Anspruch 7, wobei das externe Ereignis ein Ereignis, ausgewählt aus der folgenden Liste, ist:
- von einem Auslöser im Holster (wodurch angegeben wird, dass eine Waffe in das Holster eingesteckt ist);
- von einem Bewegungssensor (wodurch angegeben wird, dass der Bediener der BWC nach einem Sturz wieder aufsteht oder aufgehört hat zu rennen);
- von einem Geopositionssensor (wodurch bestimmt wird, dass sich die BWC in einem physischen Gebiet befindet, in dem die Videoerfassung geregelt ist);
- wenn die BWC eine vernetzte Vorrichtung ist, durch die BWC von einer anderen vernetzten Vorrichtung empfangen.

9. Verfahren nach einem der vorhergehenden Ansprüche, ferner umfassend:
Verschlüsseln, unter Verwendung asymmetrischer oder symmetrischer, unter Verwendung gemeinsamer Geheimnisse.

10. Verfahren nach einem der vorhergehenden Ansprüche, wobei der Post-Puffer-Verschlüsselungsschlüssel ein öffentlicher Schlüssel eines asymmetrischen Paars Schlüssel ist, der durch einen Empfänger der unter Verwendung des Post-Puffer-Verschlüsselungsschlüssels verschlüsselten Bildrahmen generiert wird.

11. Verfahren nach einem der vorhergehenden Ansprüche, ferner Folgendes umfassend:
Empfangen des Post-Puffer-Verschlüsselungsschlüssel in einem Verschlüsselungsmodul und
Aktivieren des Post-Puffer-Verschlüsselungsschlüssels in dem Verschlüsselungsmodul beim Verschlüsseln der zur Verschlüsselung mit dem Post-Puffer-Verschlüsselungsschlüssel identifizierten Bildrahmen der Videosequenz.

12. Verfahren nach Anspruch 10, ferner umfassend:
Entschlüsseln, durch ein Entschlüsselungsmodul, an dem Empfänger der unter Verwendung des Post-Puffer-Verschlüsselungsschlüssels verschlüsselten Bildrahmen, durch Anfordern eines privaten Schlüssels, der dem öffentlichen Schlüssel entspricht, bei einem Schlüssel-Management-Dienst.

13. Videosystem (10), angeordnet zum Erfassen einer Videosequenz von Bildrahmen und zum Aufzeichnen eines entsprechenden Videobildstroms, wobei das Videosystem Folgendes umfasst:
eine am Körper getragene Kamera (body worn camera - BWC) (12), die dazu konfiguriert ist, die Videosequenz von Bildrahmen zu erfassen, Folgendes umfassend:
eine Bildverarbeitungs-Pipeline (14), die dazu konfiguriert ist, einen Videobildstrom aus der erfassten Videosequenz zu generieren;
eine Verarbeitungsvorrichtung (16), die dazu konfiguriert ist, die Videoaufzeichnungsfunktionalität der BWC zu steuern und:
Empfangen einer Anweisung zum Beginnen der Aufzeichnung des Videobildstroms;
Empfangen einer nachfolgenden Anweisung zum Anhalten der Aufzeichnung des Videobildstroms,
in Reaktion auf das Empfangen der Anweisung zum Anhalten und vor dem Anhalten der laufenden Aufzeichnung, Fortsetzen des Aufzeichnens nachfolgender, durch die BWC erfasster Bildrahmen für eine gewisse Zeit nach dem Empfangen der Anweisung zum Anhalten, und
Anhalten der Aufzeichnung des Videobildstroms nach der gewissen Zeit; wobei das Videosystem ferner Folgendes umfasst:
ein Verschlüsselungsmodul (18), das dazu konfiguriert ist, nachfolgende, während der gewissen Zeit erfasste Bildrahmen des Videobildstroms zur Verschlüsselung unter Verwendung eines Post-Puffer-Verschlüsselungsschlüssels zu identifizieren und die zur Verschlüsselung unter Verwendung des Post-Puffer-Verschlüsselungsschlüssels identifizierten Bildrahmen zu verschlüsseln, und
eine Speichervorrichtung (20), die dazu konfiguriert ist, den unter Verwendung des Post-Puffer-Verschlüsselungsschlüssels verschlüsselten Videobildstrom zu speichern.

14. Videosystem nach Anspruch 13, wobei das Videosystem ferner Folgendes umfasst:
ein Schlüsselbereitstellungsmodul, angeordnet zum Bereitstellen eines Entschlüsselungsschlüssels zum Entschlüsseln der mit dem Post-Puffer-Verschlüsselungsschlüssel verschlüsselten Videosequenz;
einen Empfänger, der dazu konfiguriert ist, die verschlüsselte, mit dem Post-Puffer-Verschlüsselungsschlüssel verschlüsselte Videosequenz zu empfangen und die Videosequenz zu entschlüsseln, wobei der Empfänger den Entschlüsselungsschlüssel von dem Schlüsselbereitstellungsmodul empfängt, um die Entschlüsselung zu ermöglichen.

15. Am Körper getragene Kamera (body worn camera - BWC) (12), umfassend Mittel zum Implementieren des Verfahrens nach einem der Ansprüche 1-11.

## Revendications

1. Procédé dans un système vidéo (10) de capture d'une séquence vidéo de trames d'images dans une caméra portée sur le corps, BWC, (12), afin de traiter la séquence vidéo capturée dans un flux vidéo et d'enregistrer le flux vidéo, où la fonctionnalité d'enregistrement vidéo de la BWC est commandée au moyen d'un dispositif de traitement (16) de la BWC recevant des instructions, le procédé comprenant les étapes suivantes :
recevoir une instruction de démarrage de l'enregistrement du flux vidéo ; et
recevoir une instruction ultérieure d'arrêt de l'enregistrement du flux vidéo ;
en réponse à la réception de ladite instruction d'arrêt et avant d'arrêter ledit enregistrement en cours, poursuivre l'enregistrement de trames d'images subséquentes capturées par la BWC pendant une certaine durée après réception de ladite instruction d'arrêt ;
arrêter (S14) l'enregistrement du flux vidéo après ladite durée ;
identifier (S08) des trames d'images du flux vidéo capturé pendant ladite durée pour un cryptage avec une clé de cryptage post-tampon ;
crypter (S10) les trames d'images identifiées pour cryptage à l'aide de la clé de cryptage post-tampon, et stocker (S12) les trames d'images du flux vidéo cryptées avec la clé de cryptage post-tampon.

2. Procédé selon la revendication 1, comprenant en outre les étapes suivantes :
générer un flux vidéo unique comprenant la séquence vidéo capturée avant l'instruction d'arrêter l'enregistrement et les trames d'images identifiées pour le cryptage avec la clé de cryptage post-tampon, ou
générer un flux vidéo séparé contenant les trames d'image cryptées avec la clé de cryptage post-tampon.

3. Procédé selon l'une quelconque des revendications précédentes, dans lequel la clé de cryptage post-tampon est prédéterminée.

4. Procédé selon l'une quelconque des revendications précédentes, dans lequel le cryptage est effectué par la BWC avant que les images identifiées du flux vidéo ne soient affichées en utilisant la BWC ou transmises à partir de la BWC.

5. Procédé selon l'une quelconque des revendications 1 à 3, le procédé comprenant en outre les étapes suivantes :
transmettre le flux vidéo de la BWC à un dispositif de réception vidéo (26) du système vidéo externe à la BWC, avant de crypter les images identifiées du flux vidéo à l'aide de la clé de cryptage post-tampon au niveau du dispositif de réception vidéo.

6. Procédé selon l'une quelconque des revendications précédentes, dans lequel l'instruction comprenant d'arrêter l'enregistrement provient d'au moins une action sélectionnée dans la liste suivante :
- l'actionnement d'un mécanisme de commutation en liaison avec la BWC,
- l'analyse d'un contenu audio capturé sur une scène ;
- l'analyse d'un contenu d'image capturé sur une scène ;
- l'analyse de données de géolocalisation collectées ;
- l'analyse d'un signal collecté d'un capteur de mouvement ;
- l'analyse d'un signal d'un capteur externe filaire ou sans fil connecté au système vidéo ;
- dans le cas d'un système vidéo en réseau, l'analyse du contenu d'un paquet de données reçu sur le réseau.

7. Procédé selon l'une quelconque des revendications précédentes, dans lequel la BWC met fin à l'enregistrement de la séquence vidéo identifiée pour le cryptage en utilisant la clé de cryptage post-tampon, comme résultat d'au moins une action sélectionnée dans la liste suivante :
- la réception, dans la BWC, d'une instruction pour commencer l'enregistrement d'une autre séquence vidéo ;
- l'expiration d'un délai prédéterminé au cours duquel le cryptage utilisant la clé de cryptage post-tampon a été effectué ;
- l'analyse d'un contenu audio capturé sur une scène ;
- l'analyse d'un contenu d'image capturé sur une scène ;
- l'analyse des événements générés dans la BWC ;
- si la BWC est un dispositif en réseau, l'analyse, dans la BWC, des contenus dans un paquet de données reçu sur le réseau ;
- l'analyse dans la BWC d'un événement extérieur.

8. Procédé selon la revendication 7, dans lequel l'événement externe est un événement sélectionné dans la liste suivante :
- qui provient d'une gâchette de l'étui (indiquant un pistolet inséré dans un étui) ;
- qui provient d'un capteur de mouvement (indiquant que l'opérateur de la BWC se tient debout après une chute ou qu'il s'est arrêté de courir) ;
- qui provient d'un capteur de géolocalisation (déterminant que la BWC se trouve dans une zone physique où la capture vidéo est régulée) ;
- si la BWC est un périphérique en réseau, événement reçu par la BWC en provenance d'un autre périphérique en réseau.

9. Procédé selon l'une quelconque des revendications précédentes, comprenant en outre l'étape suivante :
effectuer un cryptage à l'aide de processus asymétriques ou symétriques utilisant des secrets partagés.

10. Procédé selon l'une quelconque des revendications précédentes, dans lequel la clé de cryptage post-tampon est une clé publique d'une paire de clés asymétriques générée par un récepteur des trames d'image cryptées en utilisant la clé de cryptage post-tampon.

11. Procédé selon l'une quelconque des revendications précédentes, comprenant en outre les étapes suivantes :
recevoir la clé de cryptage post-tampon dans un module de cryptage, et
activer la clé de cryptage post-tampon, dans le module de cryptage, lors du cryptage des trames d'images de la séquence vidéo identifiée pour le cryptage avec la clé de cryptage post-tampon.

12. Procédé selon la revendication 10, comprenant en outre l'étape suivante :
effectuer le décryptage, par un module de décryptage, au niveau du récepteur des trames d'images cryptées à l'aide de la clé de cryptage post-tampon, en demandant une clé privée, correspondant à la clé publique, à un service de gestion de clés.

13. Système vidéo (10) agencé pour capturer une séquence vidéo de trames d'images et pour enregistrer un flux vidéo correspondant, le système vidéo comprenant :
une caméra portée sur le corps, BWC, (12) configurée pour capturer la séquence vidéo de trames d'images, comprenant :
un pipeline de traitement d'images (14) configuré pour générer un flux vidéo à partir de la séquence vidéo capturée ;
un dispositif de traitement (16) configuré pour commander la fonctionnalité d'enregistrement vidéo de la BWC et pour :
recevoir une instruction de démarrage de l'enregistrement du flux vidéo ;
recevoir une instruction ultérieure d'arrêt de l'enregistrement du flux vidéo ;
en réponse à la réception de ladite instruction d'arrêt et avant d'arrêter ledit enregistrement en cours, poursuivre l'enregistrement de trames d'images subséquentes capturées par la BWC pendant une certaine durée après réception de ladite instruction d'arrêt ; et
arrêter l'enregistrement du flux vidéo après ladite durée ;
où le système vidéo comprend en outre :
un module de cryptage (18) configuré pour identifier les trames d'image suivantes du flux vidéo capturé pendant ladite durée pour un cryptage à l'aide d'une clé de cryptage post-tampon, et crypter les trames d'image identifiées pour un cryptage à l'aide de la clé de cryptage post-tampon, et
un dispositif de stockage (20) configuré pour stocker le flux vidéo crypté à l'aide de la clé de cryptage post-tampon.

14. Système vidéo selon la revendication 13, le système vidéo comprenant en outre :
un module de fourniture de clés agencé pour fournir une clé de décryptage pour décrypter la séquence vidéo cryptée avec la clé de cryptage post-tampon ;
un récepteur configuré pour recevoir la séquence vidéo cryptée, cryptée avec la clé de cryptage post-tampon, et pour décrypter la séquence vidéo, le récepteur recevant la clé de décryptage du module fournissant la clé pour permettre le décryptage.

15. Caméra portée sur le corps, BWC (12), comprenant des moyens pour mettre en œuvre le procédé selon l'une quelconque des revendications 1 à 11.
